# EUROPÄISCHE PATENTANMELDUNG

(11) **EP 0 595 039 A1**
(43) Veröffentlichungstag der Anmeldung: **04.05.1994**
(21) Anmeldenummer: 93115593.1
(22) Anmeldetag: 28.09.1993
(51) Int. Cl.: H04N 7/14

(54) **Gerät mit einem Display und einer Videokamera**

(30) Priorität: 30.10.1992 DE 4236663
(71) Anmelder: Alcatel SEL Aktiengesellschaft, D-70435 Stuttgart (DE)
(72) Erfinder: Weiss, Manfred, D-75342 Neuhausen (DE); Schilling, Helmut Wilhelm, D-75179 Pforzheim (DE)
(74) Vertreter: Pohl, Herbert, Dipl.-Ing

(57) **Zusammenfassung**

Beim Bildfernsprechen soll das Teilnehmerbild zum Partner parallaxefrei übertragen werden. Es wird eine Spiegel- und Videokameraanordnung angegeben, durch die zwar eine Parallaxe auftritt. Der Fehlwinkel (α) ist jedoch so klein, daß die auftretende Parallaxe vom Partner nicht mehr wahrgenommen wird.

## Beschreibung

Die vorliegende Erfindung bezieht sich auf ein Gerät mit einem Display und einer Videokamera gemäß dem Oberbegriff des Anspruchs 1.

Ein derartiges Gerät ist beispielsweise aus der DE-OS 34 31 902 bekannt. Bei senkrecht zueinander verlaufender Anordnung der optischen Achsen von Videokamera und Bildschirm ist im Schnittpunkt derselben ein um 45^{o} geneigter teildurchlässiger Spiegel vorgesehen. Der Strahlengang von der Videokamera zum Betrachter geht durch den Spiegel hindurch, wogegen der Strahlengang vom Bildschirm zum Betrachter an der Spiegelfläche zum Betrachter umgelenkt wird. Dem Betrachter gegenüber verlaufen die optischen Achsen auf einer gemeinsamen Geraden, so daß keine Parallaxefehler auftreten. Bei Anordnung von Videokamera und Bildschirm derart, daß ihre optischen Achsen parallel zueinander verlaufen, ist zusätzlich ein Umlenkspiegel vorgesehen, durch den der Strahlengang vom Bildschirm aus auf den teildurchlässigen Spiegel umgelenkt wird. In beiden Fällen muß der teildurchlässige Spiegel der Größe des Bildschirms entsprechen. Man erhält zwar hierbei vollkommene Parallaxefreiheit, jedoch sind großflächige und damit teuere und das Volumen des Gerätes vergrößernde teildurchlässige Spiegel notwendig.

Aus der DE-OS 37 43 026 ist ein Gerät bekannt, bei dem bei paralleler Anordnung der beiden genannten optischen Achsen der teildurchlässige Spiegel vor dem Bildschirm angebracht ist. Hierbei treten die gleichen Vor- und Nachteile auf wie bei dem vorbeschriebenen Gerät.

Mit der vorliegenden Erfindung soll die Aufgabe gelöst werden, ein Gerät der genannten Art kostengünstig und in kompakter Bauweise herstellen zu können, so daß es dem Wunsch großer Käuferschichten nach preisgünstigen Geräten entgegenkommt und auch ohne weiteres und problemlos auf einem Schreibtisch oder einem anderen Arbeitsplatz aufgestellt werden kann.

Gelöst wird diese Aufgabe durch die im Kennzeichen des Anspruchs 1 angegebenen Merkmale. Hierdurch ist nur noch ein kleinflächiger Spiegel mit Totalreflexion erforderlich, der am Gehäuse des Displays und möglichst nahe am Objektiv der Videokamera plaziert ist. Hierdurch erhält man nicht nur kleine Geräteabmessungen sondern durch die Vermeidung eines teildurchlässigen Spiegels kann bei gleicher Bildhelligkeit wie bei den bekannten Geräten, z.B. bei einer Bildröhre, der Strahlstrom verringert werden und auch bei der Videokamera kann eine solche mit geringerer Empfindlichkeit verwendet werden. Beides drückt sich wiederum in kostengünstigen Bauteilen aus, so daß das Gerät auch dadurch preisgünstiger herstellbar ist.

Zwar wird bei der erfindungsgemäßen Ausführung keine Parallaxefreiheit erreicht. Es hat sich jedoch herausgestellt, daß bei der gewählten Anordnung von Spiegel und Videokamera der Fehlwinkel derart klein gehalten werden kann, daß der Betrachter den Fehler nicht mehr wahrnimmt. Diese Erscheinung tritt dann ein, wenn der Fehlwinkel etwa 5^{o} bis maximal 6^{o} beträgt. Die Einhaltung dieses Winkels ist durch die beanspruchte Lösung gewährleistet.

Es sind auch Lösungen ohne Spiegelanordnungen bekannt, die jedoch wegen des großen Fehlwinkels kaum oder nicht in der Praxis einsetzbar sind.

Weitere vorteilhafte Einzelheiten der Erfindung sind in den Unteransprüchen enthalten und nachfolgend anhand der in der Zeichnung veranschaulichten Ausführungsbeispiele beschrieben. Es zeigen:
- Fig. 1: eine schematische Darstellung eines Gerätes mit Betrachter und Strahlengang von der Seite,
- Fig. 2: ein Gerät gemäß Fig. 1 bei Ansicht auf das Display,
- Fig. 3: ein Gerät mit Spiegel und Umlenkspiegel und
- Fig. 4: eine vorbekannte Lösung ohne Spiegel.

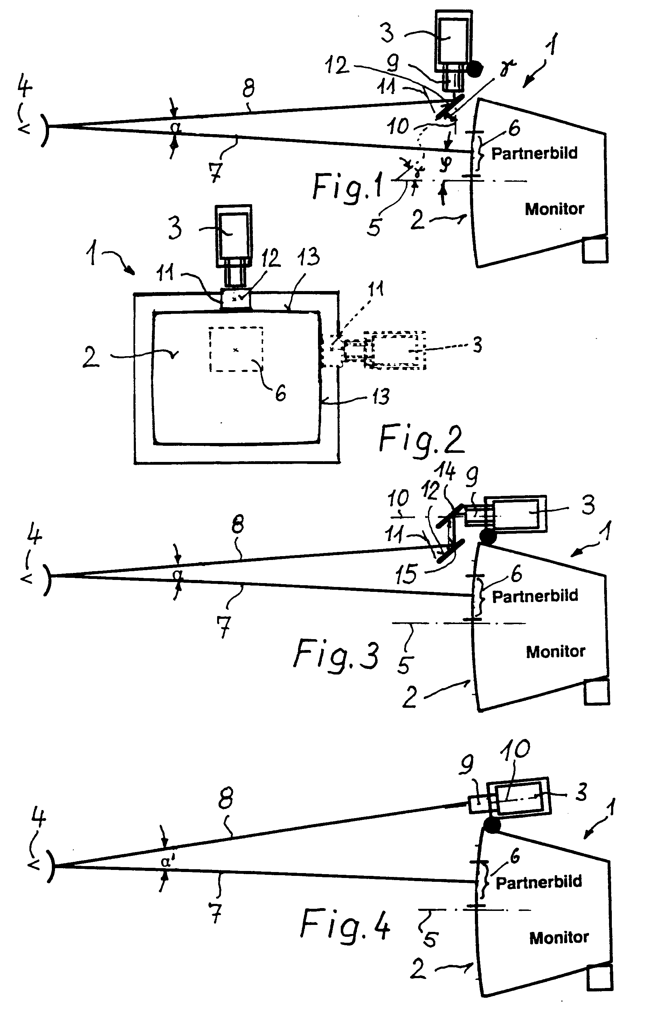

In den Figuren 1 und 2 ist mit 1 ein Gerät bezeichnet, das z.B. aus einem Monitor oder Fernsehgerät üblicher Bauart mit einem Display 2, in der Regel einem Bildschirm einer Elektronenstrahlröhre, oder ein LCC-Display oder ein Plasmabildschirm und einer zugeordneten Videokamera 3 besteht. Es dient als Teilnehmerendgerät für audio-visuelle Kommunikation, z.B. zum Bildfernsprechen.

Das Display 2 wird von einem Teilnehmer oder Betrachter 4 in der Regel unter einem Winkel φ gegenüber seiner optischer Achse 5 betrachtet, damit keine störenden Spiegelungen an der Oberfläche des Displays 2 auftreten. Sein Blick ist bei der Unterhaltung auf das am Display 2 sichtbare Partnerbild 6 gerichtet, das entweder das gesamte Display 2 ausfüllt oder bei Multimediasystemen in den oberen Bereich des Displays 2 verschoben werden kann. Bei Augenkontakt trifft also der zentrale Strahlengang 7 eines Strahlenbündels im oberen Drittel des Displays 2 auf dieses.

Damit der Betrachter 4 dem Partner parallaxefrei übermittelt werden kann, müßte der zwischen Betrachter 4 und Videokamera 3 vorhandene Strahlengang 8 mit dem Strahlengang 7 zusammenfallen. Bei der erfindungsgemäßen Lösung ist unmittelbar vor dem Objektiv 9 der Videokamdera 3, dessen optische Achse 10 senkrecht oder etwa senkrecht zur optischen Achse 5 des Displays 2 verläuft, ein Spiegel 11 in einem Winkel Υ von 45^{o} oder etwa 45^{o} zu den optischen Achsen 5, 10 angeordnet, dessen Spiegelfläche 12 dem Betrachter 4 und dem Objektiv 9 der außerhalb der Displaybegrenzung 13 vorgesehenen Videokamera 3 entsprechend der vorgesehenen Neigung zugewandt ist. Außerdem ist der Spiegel 11 in unmittelbarer Nähe des Gerätes 1 derart angeordnet, daß er sich außerhalb, insbesondere oberhalb der Displaybegrenzung 13 befindet, jedoch - vom Betrachter 4 aus gesehen - bis an diese oder nahezu an diese heranreicht oder ggf. sogar geringfügig in die Bildfläche des Displays 2 hineinragt. Vorzugsweise ist der Spiegel 11 oben mittig angeordnet wie in Fig. 2 dargestellt.

Hierdurch tritt zwischen den Strahlengängen 7 und 8 ein Fehlwinkel α auf, der jedoch so klein, also kleiner als 6^{o} ist, daß das von der Videokamera 3 aufgenommene Bild des Betrachters 4 vom Partner als parallaxefrei angesehen wird.

Gegebenenfalls kann der Spiegel 11 und die Videokamera 3 an einer seitlichen Displaybegrenzung 13, jedoch im Bereich der Augenhöhe des Partnerbildes angebracht sein, wie in Fig. 2 gestrichelt angedeutet.

In Fig. 3 ist eine Ausführung dargestellt, bei der die optische Achse 10 der Videokamera 3 etwa parallel zu derjenigen des Displays 2 verläuft. In diesem Fall ist zusätzlich ein Umlenkspiegel 14 unmittelbar dem Objektiv 9 benachbart vorgesehen und der Abstand 15 zwischen Spiegel 11 und Umlenkspiegel 14 dem zu spiegelnden Strahlenbündel entsprechend möglichst klein gewählt. Spiegel 11 und Umlenkspiegel 14 bilden also eine Art Periskop. Auch hier ist ein nicht mehr als Parallaxefehler wahrnehmbarer Fehlwinkel α gleich oder kleiner als etwa 6^{o} erreichbar.

Die Fig. 4 zeigt eine Ausführung ohne erfindungsgemäße Spiegelanwendung. Wie ohne weiteres ersichtlich, tritt hier ein stark vergrößerter Fehlwinkel α' auf. Dieser ist so groß, daß der Partner deutlich als mit einem Parallaxefehler behaftet erkennt.

## Patentansprüche

1. Gerät mit einem Display, insbesondere einem Bildschirm, und einer außerhalb der Displaybegrenzung vorgesehenen Videokamera, deren optische Achse nicht mit derjenigen des Displays zusammenfällt und mit welcher vom Gerät aus der Betrachter des Displays zwecks Parallaxenausgleichs über wenigstens einen Spiegel aufnehmbar ist, insbesondere Teilnehmerendgerät für audio-visuelle Kommunikation,
**dadurch gekennzeichnet,** daß der Strahlengang (8) vom Betrachter (4) zum Objektiv (9) der Videokamera (3) über einen Spiegel (11) geleitet ist, der außerhalb der Displaybegrenzung (13), jedoch - vom Betrachter (4) aus gesehen - an diese angrenzend derart angeordnet ist, daß seine um einen Winkel (Υ) zu jeder der optischen Achsen (5, 10) geneigte Spiegelfläche (12) dem Betrachter (4) zugewandt ist und
- entweder der Spiegel (11) unmittelbar zum Objektiv der Videokamera (3) benachbart angeordnet ist
- oder zwischen Spiegel (11) und Objektiv (9) ein Umlenkspiegel (14) vorgesehen ist und der Umlenkspiegel (14) unmittelbar zum Objektiv (9) benachbart angeordnet ist.

2. Gerät nach Anspruch 1, dadurch gekennzeichnet, daß der Spiegel (11) und der Umlenkspiegel (14) in einem dem zu spiegelnden Strahlenbündel entsprechend kleinstmöglichen oder nahezu kleinstmöglichen Abstand (15) voneinander angeordnet sind.

3. Gerät nach Anspruch 1 oder 2, dadurch gekennzeichnet, daß bei Verwendung eines Umlenkspiegels (14) Spiegel (11) und Umlenkspiegel (14) nach Art eines Periskops angeordnet sind.

4. Gerät nach Anspruch 1, 2 oder 3, dadurch gekennzeichnet, daß der Spiegel (11) oberhalb der oberen Displaybegrenzung (13) angebracht ist.

5. Gerät nach Anspruch 4, dadurch gekennzeichnet, daß der Spiegel (11) mittig oder nahezu mittig zur Linie der oberen Displaybegrenzung (13) angebracht ist.

6. Gerät nach Anspruch 1, 2 oder 3, dadurch gekennzeichnet, daß der Spiegel (11) neben einer seitlichen Displaybegrenzung (13) im Bereich der Augenhöhe eines Partnerbildes (6) angebracht ist.
